# EUROPÄISCHE PATENTANMELDUNG

(11) **EP 2 208 900 A1**
(43) Veröffentlichungstag der Anmeldung: **21.07.2010**
(21) Anmeldenummer: 10000404.3
(22) Anmeldetag: 18.01.2010
(51) Int. Cl.: F16C 23/08, F16C 35/077, F16C 21/00

(54) **Wälzlagereinheit**

(30) Priorität: 19.01.2009 DE 102009005407
(71) Anmelder: SMS Meer GmbH, 41069 Mönchengladbach (DE)
(72) Erfinder: Krieger, Wilhelm, 51519 Odenthal (DE); Fuchshofen, Dieter, 51371 Leverkusen (DE)
(74) Vertreter: Grosse, Wolf-Dietrich Rüdiger

(57) **Zusammenfassung**

Die Erfindung betrifft eine Wälzlagereinheit (1) zur Lagerung eines Maschinenteils (2) relativ zu einem Gehäuse (3), die mindestens ein Wälzlager (4) aufweist, das mindestens einen Lageraußenring (5) und mindestens einen Lagerinnenring (6) umfasst, wobei sich zwischen dem Lageraußenring (5) und dem Lagerinnenring (6) mindestens eine Reihe Wälzkörper (12) befindet und der Lageraußenring (5) in einer Bohrung (7) des Gehäuses (3) angeordnet ist.

Um in kostengünstiger und einfacher Weise eine Loslagerfunktion zur Verfügung zu stellen, sieht die Erfindung vor, dass am Außenumfang (8) des Lageraußenrings (5) oder am Innenumfang der Gehäusebohrung (7) mindestens ein Ringelement (9, 9', 9", 9"') axial fixiert angeordnet ist, das mit dem Innenumfang der Gehäusebohrung (7) oder mit dem Außenumfang (8) des Lageraußenrings (5) eine Gleitpaarung zur axialen (a) Verschiebung zwischen Ringelement (9, 9', 9", 9"') und Gehäusebohrung (7) oder Lageraußenring (5) und Ringelement (9, 9', 9", 9"') bildet.

## Beschreibung

Die Erfindung betrifft eine Wälzlagereinheit zur Lagerung eines Maschinenteils relativ zu einem Gehäuse, die mindestens ein Wälzlager aufweist, das mindestens einen Lageraußenring und mindestens einen Lagerinnenring umfasst, wobei sich zwischen dem Lageraußenring und dem Lagerinnenring mindestens eine Reihe Wälzkörper befindet und der Lageraußenring in einer Bohrung des Gehäuses angeordnet ist.

Eine Wälzlagereinheit dieser Art wird in mannigfaltiger Weise im Stand der Technik eingesetzt, beispielsweise auch für die Lagerung einer Vorgelegewelle einer Presse, insbesondere einer Gesenkschmiedepresse.

Die Herstellung der Loslagerfunktion ist dabei nicht immer problemlos und kostengünstig möglich. Sofern keine speziellen Lager eingesetzt werden, die eine Loslagerfunktion inkorporiert haben, sitzt der Außenring des Lagers beispielsweise mit Spielpassung in der Gehäusebohrung, so dass bei Bewegungen in axiale Richtung eine Verschiebung des Lageraußenrings in der Bohrung stattfinden kann. Nachteilig ist hier, dass es zu Fresserscheinungen zwischen dem Außenumfang des Lageraußenrings und der Gehäusebohrung kommen kann.

Gebräuchlich ist auch eine Lösung, bei der der Lageraußenring in einer Zwischenhülse sitzt, die ihrerseits in der Gehäusebohrung angeordnet ist. Der Lageraußenring ist dabei in der Zwischenhülse axial fixiert; die Zwischenhülse ist dann relativ zur Gehäusebohrung axial verschieblich angeordnet.

Nachteilig ist bei dieser Lösung, die eine geringere Fresseigenschaft aufweist, dass relativ hohe axiale Kräfte erforderlich sind, um die Axialverschiebung zu bewerkstelligen. Es ist auch in nachteiliger Weise möglich, dass eine Beeinträchtigung der radialen Lagerluft des Lagers in Abhängigkeit der axialen Position stattfindet. Zudem stellt die Zwischenhülse ein kostenaufwändig herzustellendes Bauteil dar, so dass die entsprechenden Kosten für die Lageranordnung hoch sind.

Der Erfindung liegt daher die Aufgabe zugrunde, eine Wälzlagereinheit der eingangs genannten Art zu schaffen, bei der es einfacher und kostengünstiger Weise möglich ist, die Loslagerfunktion von Wälzlager-Typen / Wälzlagern zu ermöglichen, welche für sich allein genommen kein nennenswertes (d. h. ausreichendes) Axialspiel aufweisen (z. B. Rillenkugellager oder Pendelrollenlager) und daher keine nennenswerte Axralverschiebung zu lassen. Dabei soll die Axialverschiebung leichtgängig, d. h. mit geringen Axialkräften zuverlässig möglich sein.

Diese Aufgabe wird erfindungsgemäß dadurch gelöst, das am Außenumfang des Lageraußenrings oder am Innenumfang der Gehäusebohrung mindestens ein Ringelement axial fixiert angeordnet ist, das mit dem Innenumfang der Gehäusebohrung oder mit dem Außenumfang des Lageraußenrings eine Gleitpaarung / ein Gleitlager zur axialen Verschiebung zwischen Ringelement und Gehäusebohrung oder Lageraußenring und Ringelement, somit also letzt endlich zwischen Wälzlager und Gehäuse bildet.

Das mindestens eine Ringelement kann in einer Ringnut im Außenumfang des Lageraußenrings, z. B. eines Rillenkugellagers oder Pendelrollenlagers, axial fixiert sein. Alternativ ist es aber auch möglich, dass das mindestens eine Ringelement in einer Ringnut der Gehäusebohrung axial fixiert sein.

Das mindestens eine Ringelement, beispielsweise ein dünnes Kunststoff-Gewebeband, kann an einer Umfangsstelle eine Unterbrechung aufweisen, was die Möglichkeit zum Längenausgleich und damit zu radialer Spielfreiheit schafft. Dazu verbleibt vorzugsweise im montierten Zustand an der Unterbrechungsstelle des Ringelements in Umfangsrichtung ein Spalt.

Es können auch mehrere Ringelemente axial nebeneinander am Außenumfang des Lageraußenrings oder am Innenumfang der Gehäusebohrung angeordnet sein. Die Ringelemente sind in diesem Falle bevorzugt äquidistant voneinander beabstandet.

### Mit der vorgeschlagenen Lösung werden verschiedene Vorteile erzielt:

Die axiale Verschiebung des Wälzlagers relativ zum Gehäuse ist zuverlässig und leichtgängig möglich, d. h. es sind nur geringe axiale Kräfte nötig, um die axiale Verschiebung zu ermöglichen.

Die vorgesehene Gleitpaarung bzw. das Gleitlager hat nur eine geringe Neigung zum Fressen, so dass die Funktionalität der Loslagerung auch langfristig sichergestellt ist.

Es erfolgt keine Beeinträchtigung bzw. Veränderung der radialen Lagerluft des Wälzlagers bei unterschiedlicher axialer Verschiebung.

Die Montage und Demontage ist einfach und daher kostengünstig möglich.

Die Fertigung der Wälzlagereinheit ist aufgrund einer relativ einfachen mechanischen Bearbeitung einfach und kostengünstig möglich. Auch die Fehlergefahr ist hierbei gering. Für die Umsetzung können Standard-Bauteile bzw -Elemente verwendet werden, was die Kosten ebenfalls gering hält. Das gilt insbesondere für die zum Einsatz kommenden Wälzlager und die als Führungsbänder ausgebildeten bzw. wirkenden Ringelemente. Insbesondere kann ein herkömmliches Wälzlager, das selber keine axiale Verschiebung zwischen Innen- und Außenring zulässt, eingesetzt bzw. verwendet werden.

Damit kann die Wälzlagereinheit in kostengünstiger Weise realisiert werden.

Wenngleich ein bevorzugter Anwendungsfall im Schwermaschinenbau liegt, insbesondere beispielsweise bei der Lagerung der Vorgelegewelle einer Gesenkschmiedepresse, kann die Erfindung grundsätzlich universell eingesetzt werden.

### In der Zeichnung sind Ausführungsbeispiele der Erfindung dargestellt. Es zeigen:

- Fig. 1: einen Axialschnitt durch eine Wälzlagereinheit zur Lagerung einer Welle, wobei zur Lagerung ein Wälzlager in Form eines Rillenkugellagers eingesetzt wird;
- Fig. 2a: in vergrößerter Darstellung von Fig. 1 den Bereich zwischen dem Außenumfang des Außenrings des Wälzlagers und der Bohrung eines Gehäuses gemäß einer ersten Ausführungsform der Erfindung; und
- Fig. 2b: in der Darstellung nach Fig. 2a eine alternative Ausführungsform der Erfindung.

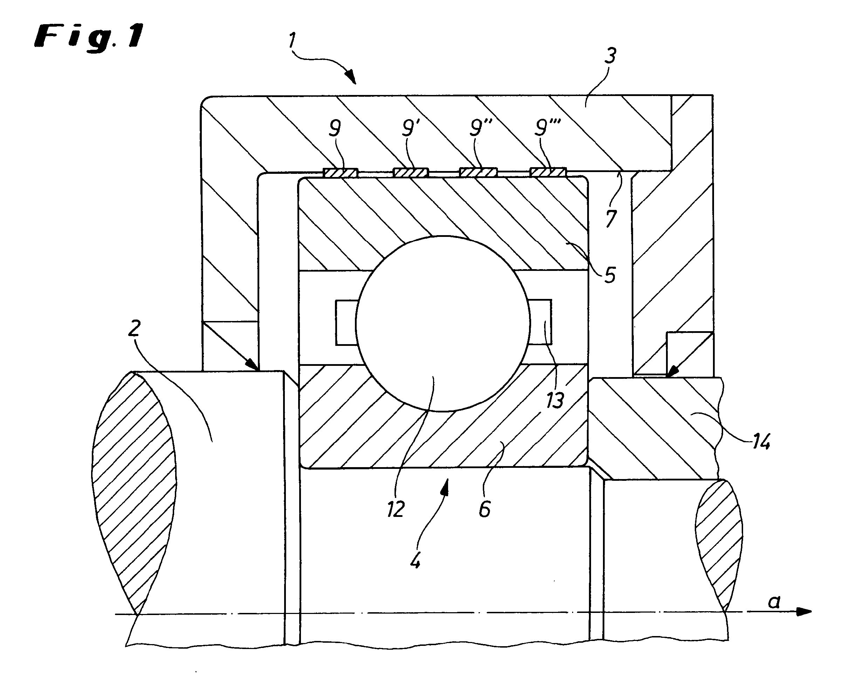

In Fig. 1 ist eine Wälzlagereinheit 1 dargestellt, mit der eine Welle 2 relativ zu einem Gehäuse 3 gelagert wird. Die Lagerung der Welle durch die Lageranordnung soll hier nur radial erfolgen; in axialer Richtung a soll eine relative Verschieblichkeit zwischen der Welle 2 und dem Gehäuse 3 möglich sein. Demgemäß soll die Wälzlagereinheit 1 eine Loslagerfunktion aufweisen.

Die Wälzlagereinheit 1 umfasst ein Wälzlager 4, das in üblicher Weise einen Außenring 5 und einen Innenring 6 aufweist, zwischen denen Wälzkörper 12 angeordnet sind. Diese werden von einem Käfig 13 in bekannter Weise gehalten. Der Lagerinnenring 6 ist dabei fest mit der Welle 2 verbunden. Er sitzt auf einem Wellenabsatz und ist mit einem Befestigungselement 14 axial fixiert.

Das Wälzlager 4 ist im Ausführungsbeispiel ein Rillenkugellager. Die Kraftübertragung in axiale Richtung ist, da die Wälzlagereinheit 1 eine Loslagerfunktion bereitstellen soll, hier allerdings nicht gewünscht. Daher ist die Lageranordnung 1 wie folgt ausgestaltet:

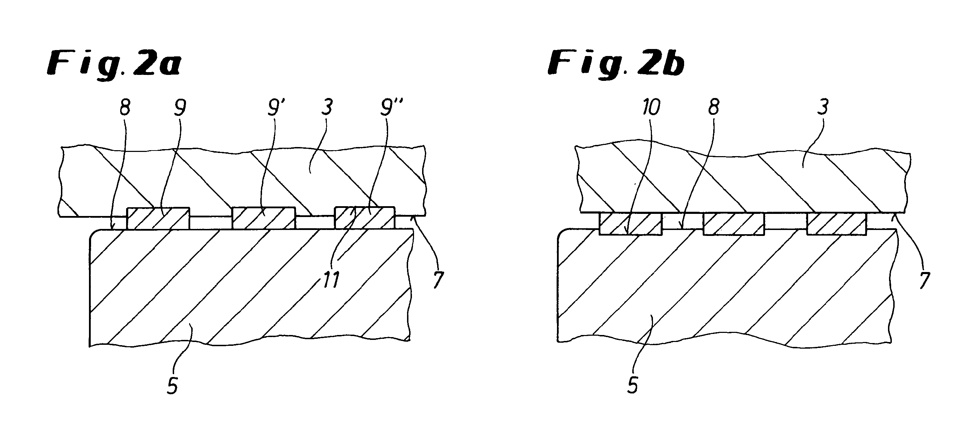

Der Lageraußenring 5 sitzt in an sich bekannter Weise in einer Bohrung 7 des Gehäuses 3. Wie es am besten in Fig. 2a zu sehen ist, sind in die Gehäusebohrung 7 des Gehäuses 3 Ringnuten 11 eingearbeitet. In diese Ringnuten 11 sind Ringelemente 9, 9', 9", 9"' eingesetzt. Hierbei handelt es sich um ringförmige Bauteile, die aus einem zum Ring gebogenen Band, z. B. mit rechteckigem bzw. mit kalottenförmigem Querschnitt, bestehen.

Der Querschnitt des Ringelements 9, 9', 9", 9"' korrespondiert mit demjenigen der Ringnuten 11, wobei allerdings die radiale Erstreckung des Ringelements 9, 9', 9", 9"' größer ist als die Nuttiefe. Demgemäß ragt das Ringelement 9, 9', 9", 9'" aus der Ringnut 11 radial heraus. Die dem Lageraußenring 5 zugewandte Seite der Ringelemente 9, 9', 9", 9"' bildet eine Gleitfläche für den Außenumfang 8 des Lageraußenrings 5.

Da der Lageraußenring 5 gehärtet ist, kann eine haltbare Gleitlagerfunktion zwischen den Ringelementen 9, 9', 9", 9"' und dem Lageraußenring 5 hergestellt werden. Das Material der Ringelemente 9, 9', 9", 9"' kann so gewählt werden, dass sich eine günstige Gleitpaarung zum Lageraußenring 5 ergibt.

In Fig. 2b ist eine andere Lösungsmöglichkeit dargestellt: Hier sind Ringnuten 10 in den Außenumfang 8 des Lageraußenrings 5 eingearbeitet, in die die Ringelemente 9, 9', 9", 9"' eingesetzt sind. Demgemäß findet hier ein Gleiten zwischen den Ringelementen 9, 9', 9", 9"' und der Gehäusebohrung 7 statt. Ansonsten entspricht die Lösung derjenigen gemäß Fig. 2a.

Der Vorteil der Ausführung gemäß Fig. 2a besteht darin, dass die Ringelemente 9, 9', 9", 9 auf dem gehärteten und geschliffenen Außenumfang des Lageraußenrings 6 gleiten, womit eine sehr günstige Reibpaarung vorliegt. Nachteilig ist allerdings, dass die axiale Verschiebebewegung des Lageraußenrings 5 begrenzt ist.

Demgemäß ist es bei der Lösung gemäß Fig. 2b von Vorteil, dass keine Begrenzung der axialen Bewegungsmöglichkeit vorliegt.

Wie bereits erwähnt, weist das Ringelement 9, 9', 9", 9"' an einer Umfangsstelle eine Unterbrechung auf. Dies ist von Vorteil, da dann ein Längenausgleich der Ringelemente 9, 9', 9", 9"' in Umfangsrichtung möglich ist. Damit kann in einfacher Weise Spielfreiheit in radiale Richtung erreicht werden.

### Bezugszeichenliste:

- 1: Wälzlagereinheit
- 2: Maschinenteil (Welle)
- 3: Gehäuse
- 4: Wälzlager
- 5: Lageraußenring
- 6: Lagerinnenring
- 7: Gehäusebohrung / Bohrung
- 8: Außenumfang des Lageraußenrings
- 9: Ringelement
- 9': Ringelement
- 9": Ringelement
- 9"': Ringelement
- 10: Ringnut (im Lageraußenring 5)
- 11: Ringnut (im Gehäuse 3)
- 12: Wälzkörper (Kugel)
- 13: Käfig
- 14: Befestigungselement

- a: axiale Richtung

## Patentansprüche

1. Wälzlagereinheit (1) zur Lagerung eines Maschinenteils (2) relativ zu einem Gehäuse (3), die mindestens ein Wälzlager (4) aufweist, das mindestens einen Lageraußenring (5) und mindestens einen Lagerinnenring (6) umfasst, wobei sich zwischen dem Lageraußenring (5) und dem Lagerinnenring (6) mindestens eine Reihe Wälzkörper (12) befindet und der Lageraußenring (5) in einer Bohrung (7) des Gehäuses (3) angeordnet ist,
**dadurch gekennzeichnet,**
**dass** am Außenumfang (8) des Lageraußenrings (5) oder am Innenumfang der Gehäusebohrung (7) mindestens ein Ringelement (9, 9', 9", 9"') axial fixiert angeordnet ist, das mit dem Innenumfang der Gehäusebohrung (7) oder mit dem Außenumfang (8) des Lageraußenrings (5) eine Gleitpaarung zur axialen (a) Verschiebung zwischen Ringelement (9, 9', 9", 9"') und Gehäusebohrung (7) oder Lageraußenring (5) und Ringelement (9, 9', 9", 9"') bildet.

2. Wälzlagereinheit nach Anspruch 1,
**dadurch gekennzeichnet,**
**dass** das mindestens eine Ringelement (9, 9', 9", 9"') in einer Ringnut (10) im Außenumfang (8) des Lageraußenrings (5) sitzt.

3. Wälzlagereinheit nach Anspruch 1,
**dadurch gekennzeichnet,**
**dass** das mindestens eine Ringelement (9, 9', 9", 9"') in einer Ringnut (11) in der Bohrung (7) des Gehäuses (3) sitzt.

4. Wälzlagereinheit nach einem der Ansprüche 1 bis 3,
**dadurch gekennzeichnet,**
**dass** das mindestens eine Ringelement (9, 9', 9", 9"') an einer Umfangsstelle eine Unterbrechung aufweist.

5. Wälzlagereinheit nach Anspruch 4,
**dadurch gekennzeichnet,**
**dass** im montierten Zustand an der Unterbrechungsstelle des Ringelements (9, 9', 9", 9"') in Umfangsrichtung ein Spalt verbleibt.

6. Wälzlagereinheit nach einem der Ansprüche 1 bis 5,
**dadurch gekennzeichnet,**
**dass** mehrere Ringelemente (9, 9', 9", 9"') axial nebeneinander am Außenumfang (8) des Lageraußenrings (5) oder am Innenumfang der Bohrung (7) angeordnet sind.

7. Wälzlagereinheit nach Anspruch 6,
**dadurch gekennzeichnet,**
**dass** die Ringelemente (9, 9', 9", 9"`) äquidistant voneinander beabstandet sind.
